# EUROPEAN PATENT APPLICATION

(11) **EP 4 804 039 A1**
(43) Date of publication of application: **09.09.2026**
(21) Application number: 25300015.2
(22) Date of filing: 05.03.2025
(51) Int. Cl.: G06F 12/0831

(54) **NETWORK DATA TRANSFER USING DEPENDENCY CHAINING**

(71) Applicant: ARM Limited, Cambridge CB1 9NJ (GB)
(72) Inventor: KASERIDIS, Dimitrios, Cambridge, CB1 9NJ (GB); PATEL, Mukesh, Cambridge, CB1 9NJ (GB); JALAL, Jamshed, Cambridge, CB1 9NJ (GB); ZHANG, Wenxuan, Cambridge, CB1 9NJ (GB); VERMA, Sakshi, Cambridge, CB1 9NJ (GB)
(74) Representative: Dehns

(57) **Abstract**

A coherent data processing network includes request nodes and one or more caching nodes. A caching node is configured as a point of coherence for a range of addresses and is configured to receive requests from the request nodes for transfer of data associated with an address in the range of addresses and form a dependency chain from the requests in the memory of the caching node. When data associated with the address is received, by the caching node, it is forwarded, based on requests in the dependency chain to the plurality of request nodes. Responsive to an incoming snoop request for the address, the caching node may break the dependency chain for request nodes to which the data has not yet been forwarded.

## Description

### BACKGROUND

For simplicity of design, many current data processing networks use scalable interconnects between nodes. The interconnect may include a number of caching nodes that provide a distributed cache. For example, a distributed system level cache (SLC) may be provided by home nodes. Each home node provides a Point of Coherence (PoC) and serialization for addresses in the same cache line. This avoids racing conditions and provides data coherency. Data flow dependencies, or "hazards," are maintained by request nodes sending all data requests for the same address to the Point of coherency (PoC). The typical way of handling such a hazard is to enforce a full serialization between transactions to the same address. That means, for example, that the home node will need to complete a current transaction -- sending the data to the request node and receiving a completion acknowledgement in response (when required) -- before processing the next request. Such serialization introduces a significant dependency on data propagation and affects the processing rate of data from multiple requests that are racing on the same data in the same address location.

### BRIEF DESCRIPTION OF THE DRAWINGS

The accompanying drawings provide visual representations which will be used to describe various representative embodiments more fully and can be used by those skilled in the art to understand better the representative embodiments disclosed and their inherent advantages. In these drawings, like reference numerals identify corresponding or analogous elements.
**FIG. 1** is an abstracted view of a data processing network, in accordance with various representative embodiments.
**FIG. 2** is a diagrammatic representation of a data processing network, in accordance with various representative embodiments.
**FIG. 3** is a sequence diagram showing read transactions in a current data processing network.
**FIG. 4** is a sequence diagram showing read transactions in a data processing network, in accordance with various representative embodiments.
**FIG. 5** is a flow chart of a method of forming a request dependency chain, in accordance with various representative embodiments.
**FIG. 6** is a flow chart of a method of processing a request dependency chain, in accordance with various representative embodiments.

### DETAILED DESCRIPTION

The various apparatus and devices described herein provide mechanisms for data transfer using dependency chaining in a data processing network.

In accordance with embodiments of the disclosure, a coherent data processing network includes request nodes and one or more caching nodes. A caching node is configured as a point of coherence for a range of addresses and is configured to receive requests from the request nodes for transfer of data associated with an address in the range of addresses and form a dependency chain from the requests in the memory of the caching node. When data associated with the address is received, by the caching node, it is forwarded, based on requests in the dependency chain to the plurality of request nodes. Responsive to an incoming snoop request for the address, the caching node may break the dependency chain for request nodes to which the data has not yet been forwarded.

A dependency chain may include a list of transaction identifiers of requests from the request nodes for a particular address or cache line. It may be, for example, a linked list in a Point of Coherency Queue (PoCQ).

The coherency protocol of some data processing networks use a Completion Acknowledgement response to maintain the order of transaction issued by a request node (RNs) and snoop transactions caused by these RN transactions. Completion Acknowledgment ensures that a snoop transaction that is ordered after a coherent transaction from the RN is received only after that coherent transaction completes. Home nodes (HNs) can maintain transaction order by stalling transactions. For example, an RN may already have an outstanding transaction that is making progress for a particular cache line. If another requester in the system issues a transaction that results in a snoop to that same line, the HN can stall this later transaction. When the original RN completes the coherent transaction, the RN sends a completion acknowledgment (CompAck) message to the HN. The HN then unblocks any snoops that were waiting for the transaction to complete.

For some workloads, performance is improved by enabling same-cache-line data to be propagated to, and shared by, multiple request nodes. This may be achieved, for example by (a) lock synchronization kernels, for which the locking mechanisms are handled near the processing cores of the request nodes and many cores are required to access and look at the same cache line (that contains the locked data structure), and (b) heavily sharable data that need to be accessed by many cores in the same narrow time window. For example, Artificial Intelligence (AI) applications may be implemented with many processing cores performing matrix multiplication operations in parallel in the same time interval using the same data. In these cases, serializing the processing of same-address requests in the PoC, and enforcing a pessimistic, overprotective dependency on data propagation, has a detrimental impact on the overall system throughput.

Various embodiments of the present disclosure remove the dependency on data propagation without violating the coherency protocol requirement for safety of data usage by request nodes.

The disclosure may be embodiment in a data processing network with a multi-layer cache hierarchy, where data hazarding can occur at multiple locations in the system.

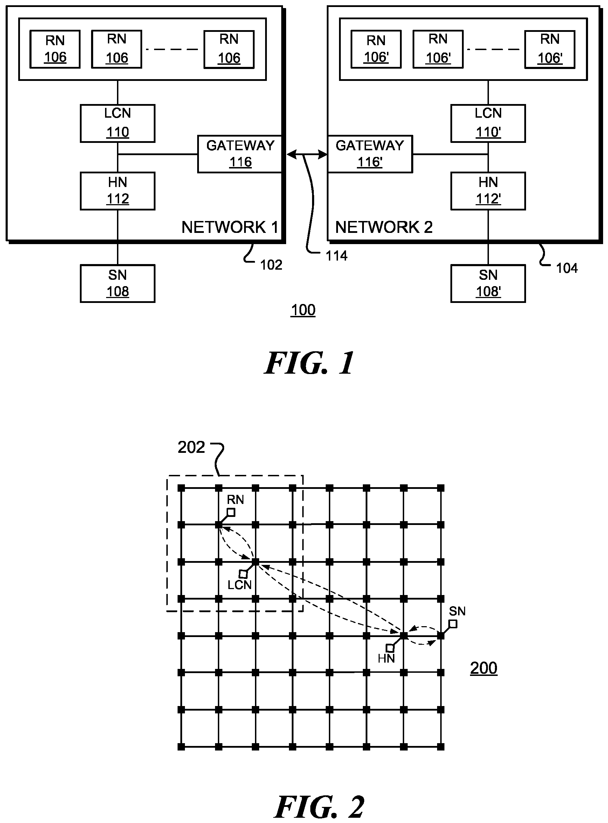

**FIG. 1** is an abstracted view of a data processing network 100, in accordance with various representative embodiments. In the embodiment shown, data processing network 100 includes first network 102 and second network 104. The first and second networks may be located on different chips or chiplets, or may be implemented as network regions on a single chip or chiplet. Network 102 includes multiple request nodes (RNs) 106 that access and process data. A request node (RN) can be Fully Coherent, input/output (I/O) Coherent, or I/O Coherent with Distributed Virtual Memory (DVM) support, for example. A Fully Coherent Request Node (RNF) contains coherent caches and will accept and respond to snoop messages. An I/O-Coherent Request Node (RNI) does not have a coherent cache, and cannot accept snoop messages. An I/O-Coherent Request Node with DVM support (RNI/D) has the same functionality as an RNI and can also accept DVM messages. A request node may be, for example, a central processing unit (CPU) core, a neural engine or other accelerator, or a Component Aggregation Layer that houses two or more CPU cores to be connected to one network port. Network 104 includes multiple request nodes (RNs) 106'.

RNs 106 are coupled to each other and to subordinate or completer nodes 108 via an interconnect circuit.

A subordinate node 108 may be, for example, a memory controller that provides access to a memory, or a peripheral device. A network may include caching nodes to reduce the number of accesses to memory and reduce the latency of data accesses. For example, a system level cache (SLC) may be distributed across a number of home nodes in the network.

Within the interconnect circuit, data may be cached in a hierarchy of caching nodes. In the example shown, the caching nodes include one or more local cache nodes (LCNs) 110 and one or more home nodes (HNs) 112. The caching nodes reduce the number of accesses to memory and reduce the latency of data accesses. Each HN and LCN acts as a Point-of-Coherency (PoC) for a range of system addresses. A system level cache may be distributed across a large set of home nodes 112 in the network to share the cache capacity over all network nodes and, optionally, across multiple chips. In this approach, a cache line of data is uniquely mapped to a home node or to a home nodes and one or more local cache nodes, and all request nodes in the system access the same node for accessing the data. Coherency maintenance at an HN or an LCN may utilize a snoop filter (SF) that tracks the location and coherency state of data copied to caches in the network.

The HNs and LCNs provide a multi-cache hierarchy of data caches. In general, one or more LCNs acts as intermediate nodes between a core L2, a cluster L3 and the final slice of the system level cache (SLC) in the home nodes. The hierarchy may be fixed, configured at power-up, or configured by software.

In network 104, request nodes 106' are coupled to subordinate nodes 108' via a cache hierarchy that includes one or more LCNs 110' and one or more HNs 112'.

Networks 102 and 104 are coupled to link 114 via gateway nodes or blocks 116 and 116', respectively. In a multi-chip network, for example, link 114 is a chip-to-chip link.

**FIG. 2** is a diagrammatic representation of a data processing network 200, in accordance with various representative embodiments. Network 200 includes a sub-network 202, indicated by the broken lines, that functions as a local cache domain (LCD) for a set of addresses. In operation, when executing a workload, request node RN processes data retrieved from subordinate node SN, which may be a memory controller, for example. In a single level cache hierarchy, data from subordinate node SN is accessed via home node HN, which acts as a point of coherency and serialization for the data address. In the simple example shown in **FIG. 2****,** home node HN is 8 hops away from request node RN. As discussed above, other request nodes may process the same data in parallel. In accordance with an embodiment of the disclosure, network 200 is configured to include sub-network 202 that includes request nodes that process the same data in parallel. Local cache node LCN within the sub-network is configured to provide a local home for data associated with the addresses, forming a two-level cache hierarchy. Request nodes in sub-network 202 can access the data from local cache node LCN in an average of two hops and a maximum of four hops. A local cache domain (LCD) is configured by associating a set of addresses in a memory of the data processing network with one or more local cache nodes in a sub-network of the data processing network (such as sub-network 202). The sub-network is configured by designating a set of one or more request nodes or a set of network cross-points. The LCN provides a secondary home, since addresses in the set of addresses are also accessible via home nodes of the data processing network, which may be outside of the sub-network.

Based on a first address in the set of addresses of the local cache domain, a local cache node in the sub-network is identified, and a data transfer request associated with the first address is routed from the RN to the local cache node associated with the data address. However, for a request node not in the sub-network, or for a second address not in the set of addresses, a data transfer request associated with the second address is routed from the second RN to the HN of the data processing network associated with the second address. For example, while a first read request may have to access data via the LCN, HN or the SN, subsequent requests, from request nodes working in parallel, can retrieve the data from the LCN.

More generally, a data processing network is partitioned into N local cache domains (LCD) that act as local cache hierarchies of data that is accessed by M grouped request nodes. A RN in one LCD, will first perform an access/lookup to an LCN in the same LCD for the data. If they do not find the data, the LCD will send a request to the associated HN.

Herein, both HNs and LCNs are referred to as "caching nodes."

The same idea can be generalized to a network that is implemented across multiple chips that are connected together over chip-to-chip links.

In prior networks, same-address requests are processed serially. Processing of a child transaction does not start until a parent transaction is completed (for example by deallocating from a Point-of-Coherency Queue (POCQ)). This affects performance of any RN that is waiting for requested data. If the request is a cacheable shareable instruction fetch that does not allocate into the local coherency cache (LLC) by default, such as a "ReadOnce" request, and the data are not already in the LCC (i.e., a LCC miss), each request is sent to the next level and get a copy of data.

For "ReadOnce" requests initiated from RNs in a multi-cache hierarchy network and "ReadNotSharedDirty" (RNSD) requests initiated from LCNs to HNs or from RNs to HNs, there is an opportunity to forward data in a faster approach without enforcing the full serialization between transactions. This is because it can be assumed that the data are either not allocated in caches in the RNs or, in the case of RNSD, is to be shared in a "Shared Clean" coherency state without any violation of data integrity. In accordance with the present disclosure, it is recognized that some transactions may be combined in a dependency chain and processed before full completion in the caching node (HN or LCN). It is further recognized that the processing may need to be stopped when a snoop request is received at the HN or LCN. A snoop request breaks the dependency chain and may switch the processing of requests to a safer and slower rate that waits for full deallocation from the caching node.

In accordance with various embodiments of the disclosure, a caching node creates a dependency chain that indicates which transactions can participate in fast forwarding of data once the data are available to the caching node. The caching node monitors for incoming snoops that will break the current dependency chain in two parts (a) the transactions that have already sent data to requestor, and (b) transactions that have not forwarded the data yet. The logic circuitry of the caching node prioritizes the processing of snoop requests by inserting the snoop processing between the two parts. After the snoop completes, and depending on the outcome of the snoops, the caching node has the ability to recreate the dependency chain or abort it.

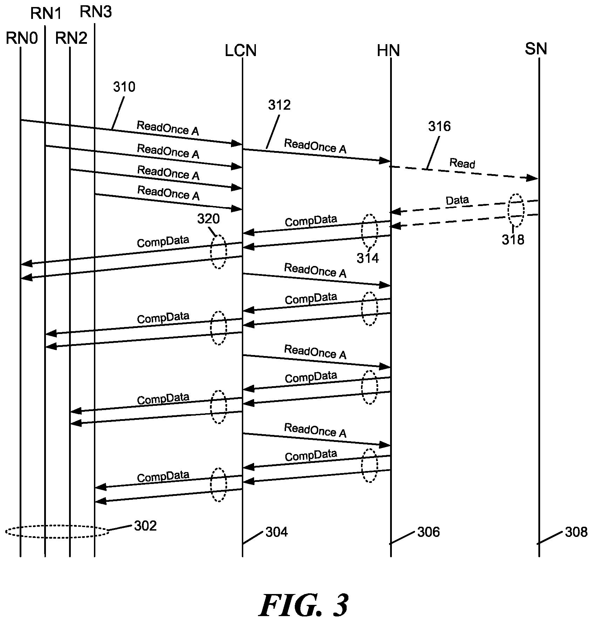

**FIG. 3** is a sequence diagram showing read transactions in a current data processing network. The example relates to a two-level hierarchy interconnect with a local cache node (LCN) and a home node (HN). The diagram shows timelines 302 for four request nodes (RN0, RN1, RN2, and RN3), timeline 304 for a local cache node (LCN), timeline 306 for a home node (HN), and timeline 308 for a subordinate node (SN) such as a memory controller. Time flows in a downward vertical direction. Four "ReadOnce A" data requests are issued from the four different request nodes, all for address "A." These requests are routed to the LCN associated with address "A." In response to first request 310, the LCN sends a corresponding request 312 to the home node. In this example, the home has a copy of the data and returns the data to the LCN in two data beats 314. When the data are not present at the home node, the data are requested from the SN in read request 316 and returned in data beats 318. The data are forwarded from the HN to request node RN0 in data beats 320. In this example, no completion acknowledgement messages are required, so this completes the first read transaction. The next read request, from RN1, is then processed by the LCN. Since the data does not allocate at the LCN, the data are retrieved again from the home node. This process continues until all four requested transactions have been completed. Thus, in a current network, each transaction needs to be fully completed before sending the data to the next RN. Multiple requests to the HN are required since the data does not allocate the data in the LCN.

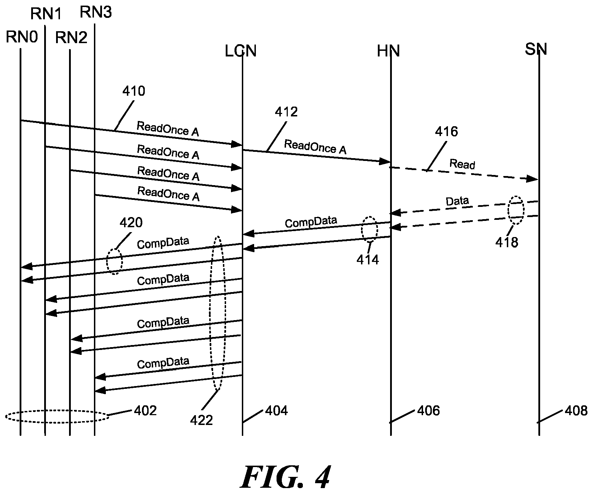

**FIG. 4** is a sequence diagram showing read transactions in a data processing network, in accordance with various embodiments of the disclosure. Again, the example relates to a two-level hierarchy interconnect with a local cache node (LCN) and a home node (HN). The diagram shows timelines 402 for four request nodes (RN0, RN1, RN2, and RN3), timeline 404 for a local cache node (LCN), timeline 406 for a home node (HN), and timeline 408 for a subordinate node (SN), such as a memory controller. Time flows in a downward vertical direction. As in **FIG. 3****,** four "ReadOnce A" data requests are issued from the four different request nodes, all for address "A." These requests are routed to the LCN associated with address "A." In response to first request 410, the LCN sends a corresponding request 412 to the home node. In this example, the home has a copy of the data and returns the data to the LCN in two data beats 414. When the data are not present at the home node, the data are requested from the SN in read request 416 and returned in data beats 418. The data are forwarded to request node RN0 in data beats 420. In this example, no completion acknowledgement messages are required, so this completes the first read transaction. In other embodiments a completion acknowledgement may be required. In accordance with the present disclosure, two levels of optimization are used. Firstly, transactions that arrive at the LCN within designated time window are chained together to form a dependency chain. In this example, requests from all four nodes are chained together. Once the data arrives at the LCN in data beats 414, they are forwarded to the first request node RN0 in data beats 420, as before. However, the data are also forwarded to the other three request nodes in the chain. Secondly, to be sure that any other transactions that arrive after the data has been forwarded can take advantage of the data being fetched in the LCN, the data are allocated in the LCN. The HN can support data forwarding in the PoC from three locations: (a) the local data cache in the case of an LCC or SLC hit, (b) memory in the case of an SLC miss (e.g., data beats 418) and, (c) data arriving at the LCN/HN as a result of snoop operation.

In one embodiment, a caching node (LCN or HN) is configured to compile chains for various sources to maximize chaining length. For example, if a number of transactions are chained and the first transaction results in a miss, the logic will forward the data once the data are received and will allocate the data in the data cache. Subsequent transactions to the same address (that may need to be serialized since the first transactions might not be full deallocated) can create a new chain that starts from the transaction that is pulling the data from the data array in the event of a cache hit, and forward the data, from that point onwards, to the remaining of chained transactions (which were waiting the hit data from the parent transaction before forwarding.

Independent of the request dependency chain, all child transactions are serially deallocated from the PoC queue only after each parent is completed.

In one embodiment, the chaining process is enabled based on a hint from in the read request from a RN, and only for the cases that are expected to share data across multiple LCNs and RNFs in small time window. Allocating data in the caching node enables transactions outside of the time window to take advantage of the chaining.

For coherent requests (RNSD), the caching node updates its snoop filter to indicate the nodes (RNs or LCNs) where that data are stored. The snoop filter may be updated for each coherent read in the dependency chain, or the snoop filter information may be accumulated using the Point of Coherence Queue (POCQ) and then single snoop filter update performed after processing the last coherent request in the dependency chain. Finally, in the case of a snoop filter hit for a "ReadOnce" request with the hint to allocate, a "SnpShared" message is be sent to pull the data from the associated node and allocate the data in the LCN or HN cache.

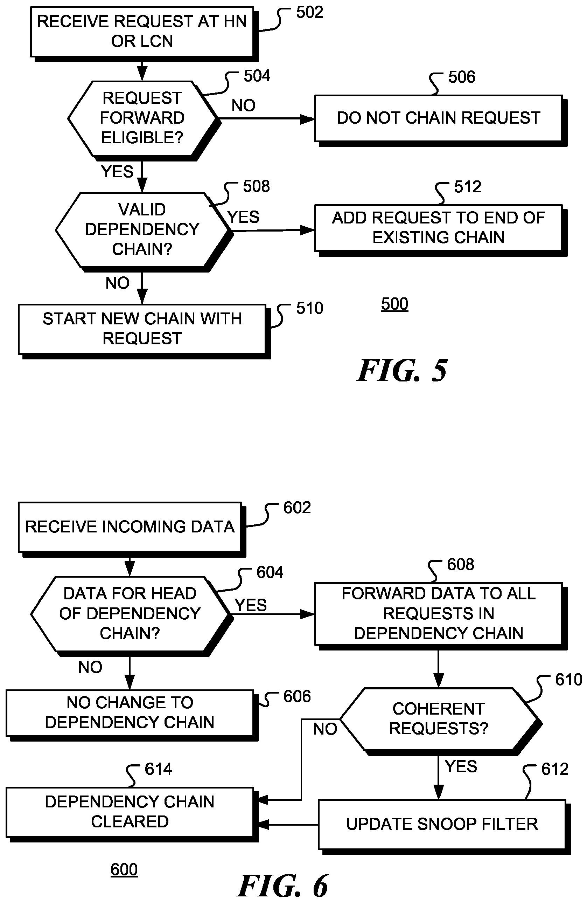

**FIG. 5** is a flow chart of a method 500 of forming a request dependency chain, in accordance with various representative embodiments. A request is received at a caching node (home node (HN) or local cache node (LCN)) at block 502. When the request is ineligible for request forwarding, as depicted by the negative branch from decision block 504, the request is not chained, as indicated by block 506. When the request is eligible for request forwarding, as depicted by the positive branch from decision block 504, flow continues to decision block 508. If no valid dependency chain exists for the requested address, as depicted by the negative branch from decision block 508, a new dependency chain is started at block 510, with the request at the head of the chain. If a valid dependency chain does exist for the requested address, as depicted by the positive branch from decision block 508, the request is added to the tail of the dependency chain at block 512. In this manner, a dependency chain of requests is formed. When the requested data arrives at the HN or LCN, the data are forwarded to all request nodes that sent the requests in the dependency chain.

**FIG. 6** is a flow chart of a method 600 of processing a request dependency chain, in accordance with various representative embodiments. Data associated with a dependency chain is received at block 602. Data may be received, for example, in response to a snoop request, in response to request to a next level cache, or from a subordinate node. When the data are not associated with a request at the head of a chain, as depicted by the negative branch from decision block 604, no change is made to the chain, as indicated by block 606. Conversely, when the data are associated with a request at the head of a chain, as depicted by the positive branch from decision block 604, the data are forwarded to all requesters in the dependency chain at block 608. If the requests in the dependency chain are coherent requests, as depicted by the positive branch from decision block 610, the snoop filter is updated at block 612. In an alternative embodiment, the snoop filter is updated each time data are sent to a requester. If the requests in the dependency chain are not coherent requests, as depicted by the negative branch from decision block 610, or once the snoop filter is updated at block 612, the dependency chain is cleared at block 614.

Performance Counters. For monitoring and reporting cache hits, using performance monitoring counters for example, a typical pipeline will only report as a cache hit when a request resulted in a lookup to the tag array of the cache and there was a match. The use of request dependency chains, as described above, avoids tag lookups and could result in erroneous counts. In order to avoid this, all data forwarding operations subsequent to a parent transaction (that initiated the initial fetch of data) are counted as cache hits, as they would have been if the requests had been serialized.

Benefits to Power. In addition to reducing the time taken to forward the data to the requestors, the disclosed chaining mechanism provides significant reductions to the power consumption. The data are allocated in the cache (according to the hint), in response to the parent request, and the data are forwarded to the other RNs in the dependency chain. This avoids a significant number of tag lookups, memory accesses and allocations in a Point-of-Coherency-Queue (PoCQ). In addition, for coherent requests, there is the possibility of accumulating snoop filter updates and performance a single final snoop filter update on completion of the dependency chain processing.

### The embodiments described herein are combinable. Embodiments of the disclosure include:

1. A method of data transfer, comprising:
   receiving, at a caching node of a coherent data processing network, requests from a plurality of request nodes of the coherent data processing network, the requests requesting transfer of data associated with an address in the coherent data processing network;
   forming, at the caching node, a dependency chain from the requests;
   retrieving, by the caching node responsive to a request from a first request node of the plurality of request nodes, data associated with the address; and forwarding, based on requests in the dependency chain, the data from the caching node to the plurality of request nodes.
2. The method of embodiment 1, where forwarding the data to one request node of the plurality of request nodes is independent of propagation of the data to other request nodes of the plurality of request nodes.
3. The method of embodiment 1, where forming the dependency chain comprises:
   determining, at the caching node, when a request is eligible for dependency chaining;
   when the request is eligible for dependency chaining and there is a dependency chain associated with the address, the dependency chain having a head and a tail:
      adding the request to the tail of the dependency chain associated with the address; and
   when the request is eligible for dependency chaining and there is no dependency chain associated with the address:
      starting a new dependency chain associated with the address, with the request at the head of the new dependency chain.
4. The method of embodiment 3, where determining when the request is eligible for dependency chaining includes determining the request to be eligible when the requested data will not be by the request node making the request.
5. The method of embodiment 3, where determining when the request is eligible for dependency chaining includes determining the request to be eligible when it is a "read once" or "read shared clean" request.
6. The method of embodiment 1, where the caching node is a local caching node of a cache domain of the coherent data processing network or a home node of the coherent data processing network.
7. The method of embodiment 1, further comprising:
   monitoring, at the caching node, for incoming snoop requests for the address; and
   responsive to an incoming snoop request for the address, breaking the dependency chain for request nodes of the plurality of request nodes to which the data has not yet been forwarded.
8. The method of embodiment 7, further comprising:
   based on the outcome of processing the incoming snoop request for the address,
   forwarding the data from the caching node to the plurality of request nodes for which the data had not yet been forwarded.
9. The method of embodiment 1, where retrieving, by the caching node responsive to the request from the first request node of the plurality of request nodes, data associated with the address includes:
   retrieving the data from a next-level cache;
   retrieving the data via a snoop request to a caching agent of the coherent data processing network; or
   retrieving the data from a cache of the caching node.
10. The method of embodiment 1, further comprising updating a snoop filter of the caching node responsive to forwarding data to each request node of the plurality of request nodes or responsive to forwarding data to all request nodes of the plurality of request nodes.
11. A coherent data processing network comprising:
   one or more caching nodes;
   where a caching node of the one or more caching nodes is configured as a point of coherence for a range of addresses and is further configured to:
   receive requests from a plurality of request nodes of the data processing network, the requests requesting transfer of data associated with an address in the range of addresses;
   form a dependency chain from the requests in a memory of the caching node;
   retrieve data associated with the address responsive to a request from a first request node of the plurality of request nodes;
   forward, based on requests in the dependency chain, the data associated with the address from the caching node to the plurality of request nodes.
12. The coherent data processing network of embodiment 11, where the caching node is configured to form the dependency chain by:
   determining when a request is eligible for dependency chaining;
   when the request is eligible for dependency chaining and there is a dependency chain associated with the address, the dependency chain having a head and a tail:
      adding the request to the head of the dependency chain associated with the address; and
   when the request is eligible for dependency chaining and there is no dependency chain associated with the address:
      starting a new dependency chain associated with the address, with the request at the head of the dependency chain.
13. The coherent data processing network of embodiment 12, where determining when the request is eligible for dependency chaining includes determining the request to be eligible if the requested data will not be written back from a cache of the request node that made the request.
14. The coherent data processing network of embodiment 12, where determining when the request is eligible for dependency chaining includes determining the request to be eligible when it is a "read once" or "read shared clean" request.
15. The coherent data processing network of embodiment 11, where the caching node is a local caching node of a cache domain of the coherent data processing network or a home node of the coherent data processing network.
16. The coherent data processing network of embodiment 11, where the caching node is further configured to:
   monitor for incoming snoop requests for the address; and
   responsive to an incoming snoop request for the address, break the dependency chain for request nodes of the plurality of request nodes to which the data has not yet been forwarded.
17. The coherent data processing network of embodiment 16, where the caching node is further configured to:
   based on the outcome of processing the incoming snoop request for the address,
   forward the data from the caching node to the plurality of request nodes to which the data had not yet been forwarded.
18. The coherent data processing network of embodiment 11, where the caching node is further configured to retrieve the data associated with the address by:
   requesting the data from a lower-level cache;
   retrieving the data via a snoop request to a caching agent of the coherent data processing network; or
   retrieving the data from a cache of the caching node.
19. The coherent data processing network of embodiment 11, where the dependency chain comprises a list of transaction identifiers of the requests from the plurality of request nodes.
20. The coherent data processing network of embodiment 11, where the caching node includes a snoop filter, and where the caching node configured to update the snoop filter responsive to forwarding data to each or every request node of the plurality of request nodes.
21. A non-transitory computer-readable medium storing computer-readable code for fabrication of a caching node in a chip of a data processing network, the caching node configured to:
   receive requests from a plurality of request nodes of the coherent data processing network, the requests requesting transfer of data associated with an address in the coherent data processing network;
   form a dependency chain from the requests;
   retrieve data associated with the address responsive to a request from a first request node of the plurality of request nodes; and
   forward the data from the caching node to the plurality of request nodes based on requests in the dependency chain.

The embodiments described herein are combinable, to include at least:
1. A method of data transfer, comprising:
   receiving, at a caching node of a coherent data processing network, requests from a plurality of request nodes of the coherent data processing network, the requests requesting transfer of data associated with an address in the coherent data processing network;
   forming, at the caching node, a dependency chain from the requests;
   retrieving, by the caching node responsive to a request from a first request node of the plurality of request nodes, data associated with the address; and
   forwarding, based on requests in the dependency chain, the data from the caching node to the plurality of request nodes;
   where the caching node is a local caching node of a cache domain of the coherent data processing network or a home node of the coherent data processing network.
2. The method of embodiment 1, where forwarding the data to one request node of the plurality of request nodes is independent of propagation of the data to other request nodes of the plurality of request nodes.
3. The method of any preceding embodiment, where forming the dependency chain comprises:
   determining, at the caching node, when a request is eligible for dependency chaining;
   when the request is eligible for dependency chaining and there is a dependency chain associated with the address, the dependency chain having a head and a tail:
      adding the request to the tail of the dependency chain associated with the address; and
   when the request is eligible for dependency chaining and there is no dependency chain associated with the address:
   starting a new dependency chain associated with the address, with the request at the head of the new dependency chain.
4. The method of embodiment 3, where determining when the request is eligible for dependency chaining includes determining the request to be eligible when the requested data will not be by the request node making the request or includes determining when the request is eligible for dependency chaining includes determining the request to be eligible when it is a "read once" or "read shared clean" request.
5. The method of any preceding embodiment, further comprising:
   monitoring, at the caching node, for incoming snoop requests for the address;
   responsive to an incoming snoop request for the address, breaking the dependency chain for request nodes of the plurality of request nodes to which the data has not yet been forwarded; and
   based on the outcome of processing the incoming snoop request for the address, forwarding the data from the caching node to the plurality of request nodes for which the data had not yet been forwarded.
6. The method of any preceding embodiment, where retrieving, by the caching node responsive to the request from the first request node of the plurality of request nodes, data associated with the address includes:
   retrieving the data from a next-level cache;
   retrieving the data via a snoop request to a caching agent of the coherent data processing network; or
   retrieving the data from a cache of the caching node.
7. The method of any preceding embodiment, further comprising updating a snoop filter of the caching node responsive to forwarding data to each request node of the plurality of request nodes or responsive to forwarding data to all request nodes of the plurality of request nodes.
8. A coherent data processing network comprising:
   one or more caching nodes;
   where a caching node of the one or more caching nodes is configured as a point of coherence for a range of addresses and is further configured to:
   receive requests from a plurality of request nodes of the data processing network, the requests requesting transfer of data associated with an address in the range of addresses;
   form a dependency chain from the requests in a memory of the caching node;
   retrieve data associated with the address responsive to a request from a first request node of the plurality of request nodes;
   forward, based on requests in the dependency chain, the data associated with the address from the caching node to the plurality of request nodes.
9. The coherent data processing network of embodiment 8, where the caching node is configured to form the dependency chain by:
   determining when a request is eligible for dependency chaining;
   when the request is eligible for dependency chaining and there is a dependency chain associated with the address, the dependency chain having a head and a tail:
   adding the request to the head of the dependency chain associated with the address; and
   when the request is eligible for dependency chaining and there is no dependency chain associated with the address:
   starting a new dependency chain associated with the address, with the request at the head of the dependency chain.
10. The coherent data processing network of embodiment 9, where determining when the request is eligible for dependency chaining includes determining the request to be eligible if the requested data will not be written back from a cache of the request node that made the request or includes determining the request to be eligible when it is a "read once" or "read shared clean" request.
11. The coherent data processing network of any of embodiments 8 to 10, where the caching node is a local caching node of a cache domain of the coherent data processing network or a home node of the coherent data processing network.
12. The coherent data processing network of any of embodiments 8 to 11, where the caching node is further configured to:
   monitor for incoming snoop requests for the address;
   responsive to an incoming snoop request for the address, break the dependency chain for request nodes of the plurality of request nodes to which the data has not yet been forwarded; and
   based on the outcome of processing the incoming snoop request for the address, forward the data from the caching node to the plurality of request nodes to which the data had not yet been forwarded.
13. The coherent data processing network of any of embodiments 8 to 12, where the caching node is further configured to retrieve the data associated with the address by:
   requesting the data from a lower-level cache;
   retrieving the data via a snoop request to a caching agent of the coherent data processing network; or
   retrieving the data from a cache of the caching node.
14. The coherent data processing network of any of embodiments 8 to 13, where the dependency chain comprises a list of transaction identifiers of the requests from the plurality of request nodes.
15. The coherent data processing network of any of embodiments 8 to 14, where the caching node includes a snoop filter, and where the caching node configured to update the snoop filter responsive to forwarding data to each or every request node of the plurality of request nodes.

While this present disclosure is susceptible of embodiment in many different forms, there is shown in the drawings and will herein be described in detail specific embodiments, with the understanding that the embodiments shown and described herein should be considered as providing examples of the principles of the present disclosure and are not intended to limit the present disclosure to the specific embodiments shown and described. In the description below, like reference numerals are used to describe the same, similar or corresponding parts in the several views of the drawings. For simplicity and clarity of illustration, reference numerals may be repeated among the figures to indicate corresponding or analogous elements.

In this document, relational terms such as first and second, top and bottom, and the like may be used solely to distinguish one entity or action from another entity or action without necessarily requiring or implying any actual such relationship or order between such entities or actions. The terms "comprises," "comprising," "includes," "including," "has," "having," or any other variations thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises ...a" does not, without more constraints, preclude the existence of additional identical elements in the process, method, article, or apparatus that comprises the element.

Reference throughout this document to "one embodiment," "certain embodiments," "an embodiment," "implementation(s)," "aspect(s)," or similar terms means that a particular feature, structure, or characteristic described in connection with the embodiment is included in at least one embodiment of the present disclosure. Thus, the appearances of such phrases or in various places throughout this specification are not necessarily all referring to the same embodiment. Furthermore, the particular features, structures, or characteristics may be combined in any suitable manner in one or more embodiments without limitation.

The term "or," as used herein, is to be interpreted as an inclusive or meaning any one or any combination. Therefore, "A, B or C" means "any of the following: A; B; C; A and B; A and C; B and C; A, B and C." An exception to this definition will occur only when a combination of elements, functions, steps or acts are in some way inherently mutually exclusive.

As used herein, the term "configured to," when applied to an element, means that the element may be designed or constructed to perform a designated function, or that is has the required structure to enable it to be reconfigured or adapted to perform that function.

Numerous details have been set forth to provide an understanding of the embodiments described herein. The embodiments may be practiced without these details. In other instances, well-known methods, procedures, and components have not been described in detail to avoid obscuring the embodiments described. The disclosure is not to be considered as limited to the scope of the embodiments described herein.

Those skilled in the art will recognize that the present disclosure has been described by means of examples. The present disclosure could be implemented using hardware component equivalents such as special purpose hardware and/or dedicated processors which are equivalents to the present disclosure as described and claimed. Similarly, dedicated processors and/or dedicated hard wired logic may be used to construct alternative equivalent embodiments of the present disclosure.

Dedicated or reconfigurable hardware components used to implement the disclosed mechanisms may be described, for example, by instructions of a hardware description language (HDL), such as VHDL, Verilog or RTL (Register Transfer Language), or by a netlist of components and connectivity. The instructions may be at a functional level or a logical level or a combination thereof. The instructions or netlist may be input to an automated design or fabrication process (sometimes referred to as high-level synthesis) that interprets the instructions and creates digital hardware that implements the described functionality or logic.

The HDL instructions or the netlist may be stored on non-transitory computer readable medium such as Electrically Erasable Programmable Read Only Memory (EEPROM); non-volatile memory (NVM); mass storage such as a hard disc drive, floppy disc drive, optical disc drive; optical storage elements, magnetic storage elements, magnetooptical storage elements, flash memory, core memory and/or other equivalent storage technologies without departing from the present disclosure. Such alternative storage devices should be considered equivalents.

Concepts described herein may be embodied in computer-readable code for fabrication of an apparatus that embodies the described concepts. For example, the computer-readable code can be used at one or more stages of a semiconductor design and fabrication process, including an electronic design automation (EDA) stage, to fabricate an integrated circuit comprising the apparatus embodying the concepts. The above computer-readable code may additionally or alternatively enable the definition, modelling, simulation, verification and/or testing of an apparatus embodying the concepts described herein.

For example, the computer-readable code for fabrication of an apparatus embodying the concepts described herein can be embodied in code defining a hardware description language (HDL) representation of the concepts. For example, the code may define a register-transfer-level (RTL) abstraction of one or more logic circuits for defining an apparatus embodying the concepts. The code may define an HDL representation of the one or more logic circuits embodying the apparatus in Verilog, SystemVerilog, Chisel, or VHDL (Very High-Speed Integrated Circuit Hardware Description Language) as well as intermediate representations such as FIRRTL. Computer-readable code may provide definitions embodying the concept using system-level modelling languages such as SystemC and SystemVerilog or other behavioral representations of the concepts that can be interpreted by a computer to enable simulation, functional and/or formal verification, and testing of the concepts.

Additionally, or alternatively, the computer-readable code may define a low-level description of integrated circuit components that embody concepts described herein, such as one or more netlists or integrated circuit layout definitions, including representations such as GDSII. The one or more netlists or other computer-readable representation of integrated circuit components may be generated by applying one or more logic synthesis processes to an RTL representation to generate definitions for use in fabrication of an apparatus embodying the invention. Alternatively, or additionally, the one or more logic synthesis processes can generate from the computer-readable code a bitstream to be loaded into a field programmable gate array (FPGA) to configure the FPGA to embody the described concepts. The FPGA may be deployed for the purposes of verification and test of the concepts prior to fabrication in an integrated circuit or the FPGA may be deployed in a product directly.

The computer-readable code may comprise a mix of code representations for fabrication of an apparatus, for example including a mix of one or more of an RTL representation, a netlist representation, or another computer-readable definition to be used in a semiconductor design and fabrication process to fabricate an apparatus embodying the invention. Alternatively, or additionally, the concept may be defined in a combination of a computer-readable definition to be used in a semiconductor design and fabrication process to fabricate an apparatus and computer-readable code defining instructions which are to be executed by the defined apparatus once fabricated.

Such computer-readable code can be disposed in any known transitory computer-readable medium (such as wired or wireless transmission of code over a network) or non-transitory computer-readable medium such as semiconductor, magnetic disk, or optical disc. An integrated circuit fabricated using the computer-readable code may comprise components such as one or more of a central processing unit, graphics processing unit, neural processing unit, digital signal processor or other components that individually or collectively embody the concept.

Various embodiments described herein are implemented using dedicated hardware, configurable hardware or programmed processors executing programming instructions that are broadly described in flow chart form that can be stored on any suitable electronic storage medium or transmitted over any suitable electronic communication medium. A combination of these elements may be used. Those skilled in the art will appreciate that the processes and mechanisms described above can be implemented in any number of variations without departing from the present disclosure. For example, the order of certain operations carried out can often be varied, additional operations can be added, or operations can be deleted, without departing from the present disclosure. Such variations are contemplated and considered equivalent.

The various representative embodiments, which have been described in detail herein, have been presented by way of example and not by way of limitation. It will be understood by those skilled in the art that various changes may be made in the form and details of the described embodiments resulting in equivalent embodiments that remain within the scope of the appended claims.

## Claims

1. A method of data transfer, comprising:
receiving, at a caching node of a coherent data processing network, requests from a plurality of request nodes of the coherent data processing network, the requests requesting transfer of data associated with an address in the coherent data processing network;
forming, at the caching node, a dependency chain from the requests;
retrieving, by the caching node responsive to a request from a first request node of the plurality of request nodes, data associated with the address; and
forwarding, based on requests in the dependency chain, the data from the caching node to the plurality of request nodes;
where the caching node is a local caching node of a cache domain of the coherent data processing network or a home node of the coherent data processing network.

2. The method of claim 1, where forwarding the data to one request node of the plurality of request nodes is independent of propagation of the data to other request nodes of the plurality of request nodes.

3. The method of any preceding claim, where forming the dependency chain comprises:
determining, at the caching node, when a request is eligible for dependency chaining;
when the request is eligible for dependency chaining and there is a dependency chain associated with the address, the dependency chain having a head and a tail:
adding the request to the tail of the dependency chain associated with the address; and
when the request is eligible for dependency chaining and there is no dependency chain associated with the address:
starting a new dependency chain associated with the address, with the request at the head of the new dependency chain.

4. The method of claim 3, where determining when the request is eligible for dependency chaining includes determining the request to be eligible when the requested data will not be by the request node making the request or includes determining when the request is eligible for dependency chaining includes determining the request to be eligible when it is a "read once" or "read shared clean" request.

5. The method of any preceding claim, further comprising:
monitoring, at the caching node, for incoming snoop requests for the address;
responsive to an incoming snoop request for the address, breaking the dependency chain for request nodes of the plurality of request nodes to which the data has not yet been forwarded; and
based on the outcome of processing the incoming snoop request for the address,
forwarding the data from the caching node to the plurality of request nodes for which the data had not yet been forwarded.

6. The method of any preceding claim, where retrieving, by the caching node responsive to the request from the first request node of the plurality of request nodes, data associated with the address includes:
retrieving the data from a next-level cache;
retrieving the data via a snoop request to a caching agent of the coherent data processing network; or
retrieving the data from a cache of the caching node.

7. The method of any preceding claim, further comprising updating a snoop filter of the caching node responsive to forwarding data to each request node of the plurality of request nodes or responsive to forwarding data to all request nodes of the plurality of request nodes.

8. A coherent data processing network comprising:
one or more caching nodes;
where a caching node of the one or more caching nodes is configured as a point of coherence for a range of addresses and is further configured to:
receive requests from a plurality of request nodes of the data processing network, the requests requesting transfer of data associated with an address in the range of addresses;
form a dependency chain from the requests in a memory of the caching node;
retrieve data associated with the address responsive to a request from a first request node of the plurality of request nodes;
forward, based on requests in the dependency chain, the data associated with the address from the caching node to the plurality of request nodes.

9. The coherent data processing network of claim 8, where the caching node is configured to form the dependency chain by:
determining when a request is eligible for dependency chaining;
when the request is eligible for dependency chaining and there is a dependency chain associated with the address, the dependency chain having a head and a tail:
adding the request to the head of the dependency chain associated with the address; and
when the request is eligible for dependency chaining and there is no dependency chain associated with the address:
starting a new dependency chain associated with the address, with the request at the head of the dependency chain.

10. The coherent data processing network of claim 9, where determining when the request is eligible for dependency chaining includes determining the request to be eligible if the requested data will not be written back from a cache of the request node that made the request or includes determining the request to be eligible when it is a "read once" or "read shared clean" request.

11. The coherent data processing network of any of claims 8 to 10, where the caching node is a local caching node of a cache domain of the coherent data processing network or a home node of the coherent data processing network.

12. The coherent data processing network of any of claims 8 to 11, where the caching node is further configured to:
monitor for incoming snoop requests for the address;
responsive to an incoming snoop request for the address, break the dependency chain for request nodes of the plurality of request nodes to which the data has not yet been forwarded; and
based on the outcome of processing the incoming snoop request for the address, forward the data from the caching node to the plurality of request nodes to which the data had not yet been forwarded.

13. The coherent data processing network of any of claims 8 to 12, where the caching node is further configured to retrieve the data associated with the address by:
requesting the data from a lower-level cache;
retrieving the data via a snoop request to a caching agent of the coherent data processing network; or
retrieving the data from a cache of the caching node.

14. The coherent data processing network of any of claims 8 to 13, where the dependency chain comprises a list of transaction identifiers of the requests from the plurality of request nodes.

15. The coherent data processing network of any of claims 8 to 14, where the caching node includes a snoop filter, and where the caching node configured to update the snoop filter responsive to forwarding data to each or every request node of the plurality of request nodes.
